# EUROPÄISCHE PATENTANMELDUNG

(11) **EP 2 481 468 A1**
(43) Veröffentlichungstag der Anmeldung: **01.08.2012**
(21) Anmeldenummer: 11152688.5
(22) Anmeldetag: 31.01.2011
(51) Int. Cl.: B01D 53/14

(54) **Lösungsmittel, Verfahren zur Bereitstellung einer Absorptionsflüssigkeit, sowie Verwendung des Lösungsmittels**

(71) Anmelder: Siemens Aktiengesellschaft, 80333 München (DE)
(72) Erfinder: Fischer, Björn, 60318, Frankfurt a.M. (DE); Joh, Ralph, 63500, Seligenstadt (DE); Schneider, Rüdiger, 65817, Eppstein (DE)

(57) **Zusammenfassung**

Die Erfindung betrifft ein Lösungsmittel (2) zur selektiven Absorption von CO₂ aus dem Rauchgas einer Verbrennungsanlage. Das Lösungsmittel (2) umfassend eine wässrige Lösung eines sekundären Amins (4) als aktive Waschsubstanz und einen auf die Bildung von Nitrosamin inhibierend wirkenden Zusatzstoff (6), wobei der Zusatzstoff (6) ein primäres Amin (3) umfasst. Die Erfindung betrifft weiterhin ein Verfahren zur Bereitstellung einer Absorptionsflüssigkeit, sowie die Verwendung des Lösungsmittels (2) zur selektiven Absorption von CO₂ aus dem Rauchgas einer Verbrennungsanlage.

## Beschreibung

Bei fossilbefeuerten Kraftwerksanlagen zur Erzeugung elektrischer Energie entsteht durch die Verbrennung eines fossilen Brennstoffes ein kohlendioxidhaltiges Rauchgas. Zur Vermeidung bzw. zur Verringerung von Kohlendioxid-Emissionen muss Kohlendioxid aus den Rauchgasen abgetrennt werden. Zur Abtrennung von Kohlendioxid aus einem Gasgemisch sind allgemein verschiedene Methoden bekannt. Insbesondere zum Abtrennen von Kohlendioxid aus einem Rauchgas nach einem Verbrennungsprozess ist die Methode der Absorption-Desorption gebräuchlich. In großtechnischem Maßstab wird Kohlendioxid (CO₂) dabei mit einer Absorptionsflüssigkeit aus dem Rauchgas herausgewaschen (CO₂ Capture Prozess).

Gängige Absorptionsflüssigkeiten (Lösungsmittel) basieren auf primären, sekundären oder tertiären Aminen und zeigen eine gute Selektivität und eine hohe Kapazität für Kohlendioxid CO₂. Hauptziel bei der Rauchgaswäsche ist die Verringerung des klimaschädlichen Kohlendioxids. Der dafür eingesetzte Prozess sollte aber keine weiteren Emissionen verursachen, die die Umwelt bzw. den Menschen schädigen können.

Ein schwerwiegenderes Problem entsteht jedoch im CO₂ Capture-Prozess durch die Verbindung der Amine aus der Absorptionsflüssigkeit mit den Stickoxiden (N0ₓ aus dem Rauchgas der Verbrennungsanlage. Auch wenn die Konzentration an Stickoxiden im Rauchgas vergleichsweise gering ist, bilden Amine mit Stickoxiden direkt, durch Abbauprodukte oder über Nebenreaktionen auf lebende Organismen karzinogen (krebserregend) wirkende Nitrosoamine (N-Nitroso-Verbindungen). Die gebildeten Nitrosamine können einen geringen Dampfdruck aufweisen, weshalb sie über das gereinigte Rauchgas mit in die Atmosphäre ausgetragen werden können.

In der Öffentlichkeit stehen Nitrosamine unter hoher Beachtung, da sie in Nahrungsmitteln (insbesondere bei unsachgemäßer Zubereitung) vorkommen können und in der überwiegenden Zahl als krebserregend gelten. Daher sind Nitrosamine im Fokus der aktuellen Diskussion um Kohlendioxid arme Kraftwerke und sicherheitsrelevant für den Betrieb von mit Amin-basirten Lösungsmitteln. Eine Minimierung der Nitrosaminkonzentration im C0₂ Capture Prozess ist daher von großer Wichtigkeit für die Akzeptanz der Technologie in der Öffentlichkeit.

Nur die aus sekundären Aminen gebildeten Nitrosamine sind zeitlich stabil. Die primären Nitrosamine reagieren weiter zu Alkenen und Alkoholen (Lehrbuch der organischen Chemie; Beyer und Walter, 1991), welche deutlich unbedenklicher sind als die karzinogenen Nitrosamine. Tertiäre Amine können nur durch ihre Zersetzungsprodukte, sekundäre Amine, zu stabilen Nitrosaminverbindungen reagieren. Der Grund warum sekundäre Amine trotzdem den primären Aminen in C0₂ Capture-Anlagen vorgezogen werden ist die geringere Bindungsenergie und damit eine niedrigere Wirkungsgradeinbuße des gesamten Kraftwerks. Außerdem zeigen sekundäre Amine gegenüber primären Aminen eine deutlich höhere Beladungskapazität für CO₂. Tertiäre Amine haben den Nachteil, dass sie sehr langsam mit Kohlendioxid reagieren und dadurch große Kolonnen benötigen.

Bei Gaswäschen in der chemischen Industrie tritt das Problem nicht auf, da die nitrosierende Substanz (Stickstoffdioxid bzw. der zu Stickstoffdioxid zu oxidierende Stickstoffmonoxid) in der Regeln nicht vorhanden ist und es dadurch auch nicht zu einer Nitrosierung kommen kann. In einigen Prozessen, wie z.B. der Reifenindustrie, werden dem Prozess gezielt Inhibitoren zugesetzt, um die Bildung der N-Nitroso Komponenten zu verhindern. In der Lebensmittel Industrie gibt es einige bekannte und wirksame Inhibitoren, wie z.B. Selen. Das dort vorliegende saure Milieu unterscheidet sich aber deutlich von den alkalischen Bedingungen bei der C0₂-Abscheidung. Im C0₂-Abscheideprozess müssten diese Inhibitoren, sofern sie den unter den Bedingungen eines CO₂ Capture-Prozesses überhaupt wirksam sind, in großen Mengen vorgelegt werden, um bei der Reaktion mit dem nitrosierenden Reagenz gegen das in großer Konzentration vorliegende Amin zu konkurrieren. Extrem nachteilig für den CO₂ Capture-Prozess wirkt sich dabei die große Fracht an inaktiver Substanz (Inhibitor) im Prozesskreislauf aus, die zusätzlich umgepumpt werden muss und dadurch den Wirkungsgrad des Kraftwerks weiter senkt.

Eine Aufgabe der Erfindung ist es, ein Lösungsmittel mit einem sekundären Amin anzugeben, welches bei Kontakt mit Stickstoffdioxid deutlich in der Bildung von Nitrosaminen reduziert ist. Eine weitere Aufgabe der Erfindung besteht in der Angabe eines Verfahrens zur Bereitstellung einer Absorptionsflüssigkeit, die in der Bildung von Nitrosaminen reduziert ist. Weiterhin ist es Aufgabe der Erfindung eine Verwendung eines Lösungsmittels zur selektiven Absorption von CO₂ aus dem Rauchgas einer Verbrennungsanlage anzugeben. Zudem gilt es die Nachteile aus dem Stand der Technik zu vermeiden.

Die auf ein Lösungsmittel gerichtete Aufgabe der Erfindung wird gelöst durch ein Lösungsmittel, umfassend eine wässrige Lösung eines sekundären Amins und einem auf die Bildung von Nitrosamin inhibierend wirkenden Zusatzstoff, wobei der Zusatzstoff ein primäres Amin oder ein primäres Aminosäuresalz umfasst.

Die Erfindung geht von der Erkenntnis aus, dass Stickstoffdioxid schneller mit einem primären Amin reagiert, als mit einem sekundären Amin. Dadurch kommt es bevorzugt zu den instabilen primären Nitrosaminen, die weiter zu Alkenen und Alkoholen reagieren. Die Reaktion des Stickstoffdioxids mit den sekundären Aminen erfolgt im Vergleich zu den primären Aminen relativ langsam, so dass durch die Erfindung die Bildung von stabilen, sekundären Nitrosaminen deutlich inhibiert wird. Daraus resultiert, dass sich bereits durch eine geringe Zugabe eines primären Amins zum Lösungsmittel die Bildung an stabilen Nitrosaminverbindungen im großen Umfang reduzieren lässt. Die Stärke der Inhibierung hängt ab von der Menge an primärem Amin und der Reaktionsgeschwindigkeit dieses mit der nitrosierenden Substanz, dass durch den Zusatzstoff dem Lösungsmittel beigemischt ist. Vorteilhaft hat sich die Zugabe eines primären Amins in dem Zusatzstoff im unteren Prozentbereich, bezogen auf die Menge an sekundärem Amin, erwiesen.

Der große Verteil des primären Amins als Zusatzstoff liegt darin, dass er aktiv an der Absorption und Desorption von CO₂ aus dem Rauchgas mitwirkt. Dadurch ist trotz verhältnismäßig großem Anteil des primären Amins kein erhöhter Umpump des Lösungsmittels erforderlich.

Die verwendeten Amine können Alkanolamine, sterisch gehinderte Amine, Aminosäuren oder Aminosäuresalze sein. Durch die Erfindung wird der Aufwand für besondere Maßnahmen im Umgang mit dem Nitrosamin bildenden Lösungsmittel erheblich reduziert. Das sekundäre Amin in dem Lösungsmittel ist die vorrangige aktive Waschsubstanz des Absorbens. Das primäre Amin nimmt auch aktiv an dem Waschprozess teil, ist aber aufgrund der höheren Bindungsenergie und der niedrigeren Beladungskapazität nachrangig einzustufen.

Vorteilhaft hat sich ein Verhältnis zwischen sekundären Amin und primären Amin zwischen 80:20 und 99:1, und weiter vorteilhaft zwischen 90:10 und 95:05 erwiesen. Das Verhältnis bezieht sich auf Gewichtprozente. Ziel der Zugabe des Zusatzstoffes ist vornehmlich eine deutliche Inhibierung der Bildung von stabilen Nitrosaminen. Durch das primäre Amin in dem Zusatzstoff wird dieses Ziel erreicht. Dennoch gibt es negative Einflüsse des primären Amins auf das Lösungsmittel mit dem sekundären Amin. Der Vorteil, der höheren Reaktionsfreudigkeit des primären Amins gegenüber dem sekundären Amin ist mit dem Nachteil der höheren Bindungsenergie verbunden. Dadurch wird für die Desorption mehr Energie zum Aufbrechen der primären Aminbindungen erforderlich. Das primäre Amin sollte daher in einem möglicht geringen Verhältnis zu dem sekundären Amin stehen. Dabei gilt abzuwägen, ob es aus wirtschaftlichen Gesichtspunkten günstiger ist, bei höherem Verhältnis an primärem Amin, mehr Energie in die Desorption des Lösungsmittels zu stecken, oder bei einem geringeren Verhältnis an primärem Amin mehr Energie in die nachträgliche Zerstörung der Nitrosamine, bzw. in die Aufreinigung des Lösungsmittels zu investieren. Unter Umständen ist eine Zugabe im unteren Bereich sogar energetisch Vorteilhaft aufgrund der schnelleren Reaktionsgeschwindigkeit. Diese führt zu einer Aktivierung des gesamten Lösungsmittels und führt zur vermehrten CO₂-Aufnahme im Absorber.

In einer Vorteilhaften Ausgestaltung ist das sekundäre Amin ein Aminosäuresalz. In einer weiteren vorteilhaften Ausgestaltung ist das primäre Amin ein Aminosäuresalz. Zweckmäßigerweise würde man daher das primäre als auch das sekundäre Amin aus der Gruppe der Aminosäuresalze wählen. Aminosäuresalze haben gegenüber anderen Aminen wie Alkanolamine, sterische gehinderten Aminen oder Aminosäuren den Vorteil, dass sie keinen merklichen Dampfdruck aufweisen. Das Erfindungsgemäße Lösungsmittel ist bei Aminosäuresalzen besonders vorteilhaft anwendbar, da bei Aminosäuresalzen die nachträgliche Aufreinigung, bzw. die Zerstörung der stabilen Nitrosamine weitaus schwieriger ist als im Vergleich zu herkömmlichen Aminen wie den Alkanolaminen oder sterisch gehinderten Aminen. Bei Alkanolaminen bietet sich die Destillation zur Aufreinigung an. Aufgrund des nicht vorhandenen Dampfdrucks ist dies hingegen bei Aminosäuresalzen nicht möglich. Diese können lediglich durch Kristallisation des Salzes von den Nitrosaminen getrennt werden.

Die auf ein Verfahren gerichtete Aufgabe wird gelöst durch ein Verfahren zur Bereitstellung einer Absorptionsflüssigkeit, bei dem eine wässrigen Lösung mit einem sekundären Amin angesetzt wird, und in die wässrige Lösung ein Zusatzstoff eingebracht wird, wobei der Zusatzstoff mindestens ein primäres Amin umfasst.

Der Zusatzstoff kann dabei noch weitere Bestandteile beinhalten. Auch ist es möglich, dass verschiedene primäre Amine gemischt vorliegen.

Vorteilhaft hat sich ein Verhältnis zwischen sekundären Amin und primären Amin zwischen 80:20 und 99:1 erwiesen. Weiter Vorteilhaft ist das Verhältnis zwischen 90:10 und 95:05.

Bei einer besonderen Anwendung des Verfahrens, wird als sekundäres Amin ein Aminosäuresalz in der wässrigen Lösung gelöst. Als primäres Amin wird vorteilhaft ein Aminosäuresalz gelöst.

Die auf eine Verwendung gerichtete Aufgabe der Erfindung ist gelöst durch die Verwendung eines Lösungsmittels zur selektiven Absorption von CO₂ aus dem Rauchgas einer Verbrennungsanlage, wobei das Lösungsmittel eine wässrige Lösung eines sekundären Amins und einen Zusatzstoff enthält, wobei der Zusatzstoff mindestens ein primäres Amin umfasst. Die Verbrennungsanlage kann dabei ein fossil befeuerten Dampfkraftwerk, eine Gasturbinenanlage, oder eine kombinierte Gas- und Dampfturbinenanlage sein.

Bei einer Vorteilhaften Weiterentwicklung wird der Zusatzstoff im Betrieb der CO₂ Capture-Anlage in dem Maße nachgeführt, wie er verbraucht wird.

Nachfolgend werden Ausführungsbeispiele der Erfindung anhand von Figuren näher erläutert. Darin zeigt:
- FIG 1: ein Diagramm mit der Bildungsrate von Nitrosaminen über der Zeit,
- FIG 2: eine Strukturformel mit der Bildung und dem Zerfall eines primären Amins,
- FIG 3: eine Strukturformel mit der Bildung eines sekundären Amins,
- FIG 4: ein Beispiel eines sekundären Amins,
- FIG 5: ein alternatives Beispiel eines sekundären Amins,
- FIG 6: ein Beispiel eines primären Amins,
- FIG 7: ein alternatives Beispiel eines primären Amins,
- FIG 8: ein weiteres alternatives Beispiel eines primären Amins.

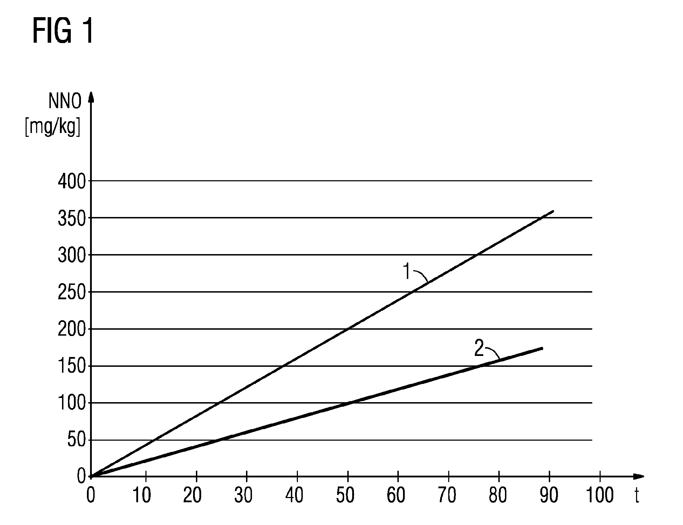

Das in FIG 1 dargestellte Diagramm zeigt die Bildungsrate von stabilen Nitrosaminen (NNO) in mg pro kg über der Zeit. Die obere Funktion zeigt schematisch die Bildungsrate eines Lösungsmittels 1 mit einem sekundären Amin 4 als aktive Waschsubstanz. Zu erkennen ist der Anstieg der Nitrosamine 5 über die Zeit, also in Verbindung des Lösungsmittels mit dem CO₂-haltigen Rauchgas. Der Anstieg der Nitrosaminkonzentration erfolgt bis zum Gleichgewicht der Reaktion der stabilen Nitrosamine 5 in dem Lösungsmittel 1 (nicht in der Abbildung zu erkennen). Die unter Funktion zeigt ein Lösungsmittel 2 mit demselben sekundärem Amin 4 und einem ein primäres Amin 3 umfassenden Zusatzstoff 6. Das Verhältnis zwischen sekundären Amin 4 und primären Amin 3 beträgt in diesem Ausführungsbeispiel 95:5. Die Funktionen zeigen, dass die Bildungsrate bei einem Lösungsmittel mit einem Zusatzstoff 6, der ein primäres Amin 3 enthält, gegenüber einem Lösungsmittel mit einem rein sekundären Amin 4 wesentlich geringer ist. Mit Zunehmender Konzentration an primären Amin 3 lässt sich die Bildung von Nitrosaminen 5 weiter inhibieren.

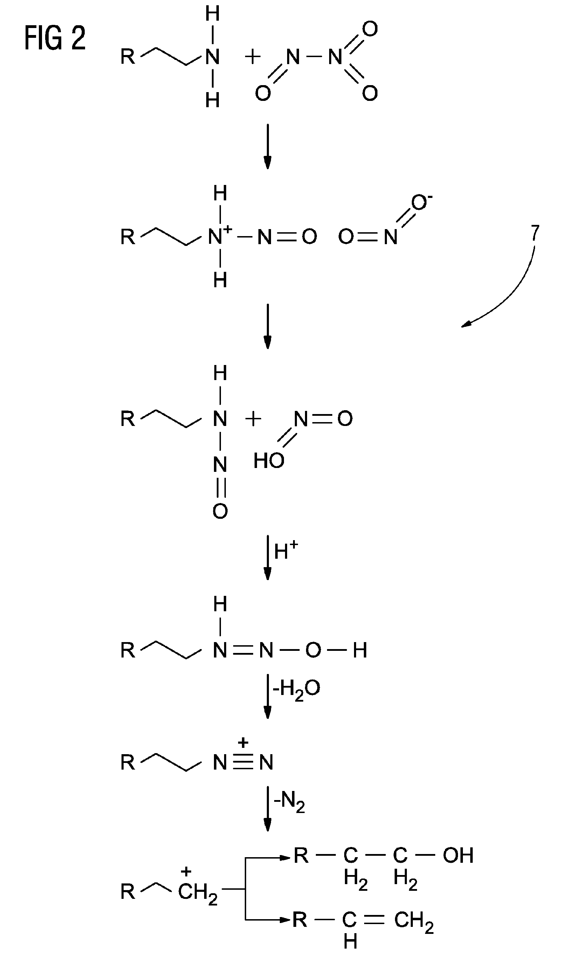

FIG 2 zeigt eine Strukturformel mit einer beispielhaften Bildung und dem Zerfall einer instabilen primären Nitrosaminverbindung 7 aus einem primären Amin 3. Der Strukturformel ist zu entnehmen, dass ein primäres Amin 3 zusammen mit NO₂ zu einer instabilen Nitrosminverbindung 7 reagiert. Die instabilen Nitrosminverbindung 7 zerfallen anschließend wieder unter Bildung von den entsprechenden Alkenen und Alkoholen, die aus Umwelttechnischen und Gesundheitlichen Aspekten deutlich unbedenklicher sind.

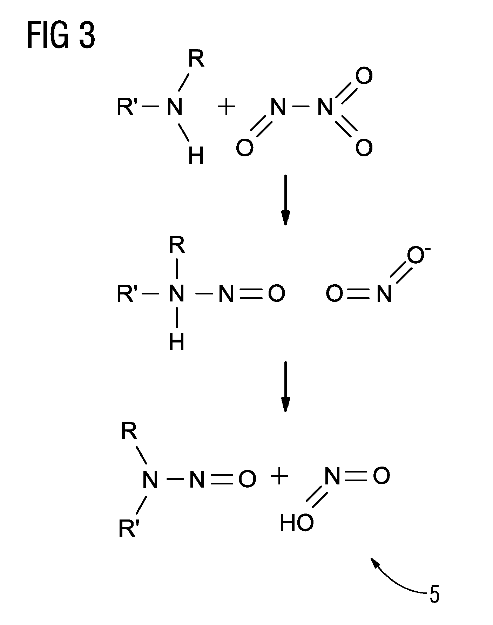

Im Vergleich zu FIG 2 zeigt FIG 3 eine Strukturformel mit einer Beispielhaften Bildung einer stabilen sekundären Nitrosaminverbindung 5. Das Sekundäre Amin reagiert in Verbindung mit dem NO₂ zu einer stabilen Nitrosaminverbindung 5, die nicht weiter im Prozess reagiert. Es erfolgt also kein Zerfall oder Abbau der Nitrosamine, wodurch sich im Lösungsmittel im Laufe des Kontakts mit den sauren Rauchgasen (CO₂, NO₂ etc.) eine hohe Konzentration an stabiler Nitrosaminverbindungen 5 anreichert.

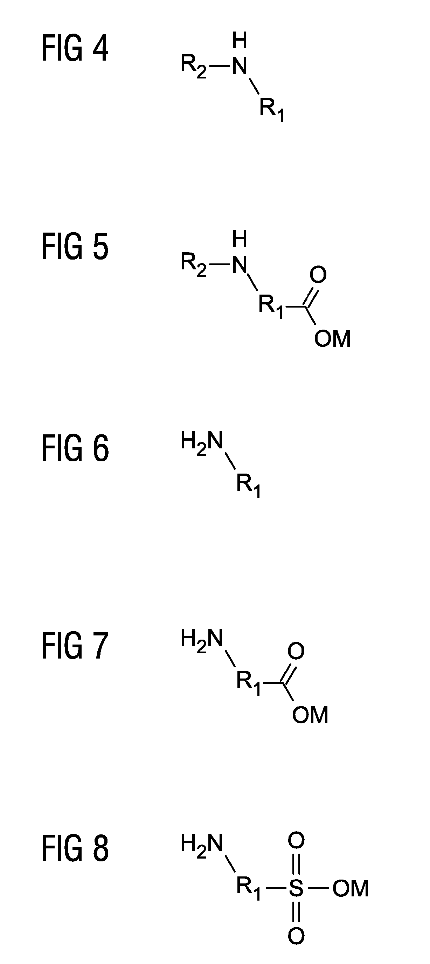

Die FIG 4 bis FIG 8 zeigen beispielhafte primäre und sekundäre Amine. FIG 4 zeigt ein sekundäres Amin, wobei R1 und R2 stehen für Alkyl, Aryl, Hydroxylalkyl oder Halogenalkyl.

FIG 5 zeigt ein alternatives Beispiel für ein sekundäres Amin (Aminosäuresalz)wobei R1 und R2 stehen für Alkyl, Aryl, Hydroxylalkyl oder Halogenalkyl und M für Na, K, Li, Mg, Ca oder Be.

FIG 6 zeigt ein Beispiel eines primären Amins wobei R1 und R2 stehen für Alkyl, Aryl, Hydroxylalkyl oder Halogenalkyl. Alternativ zu FIG 5 zeigt FIG 6 ein primäres Amin wobei R1 für Alkyl, Aryl, Hydroxylalkyl oder Halogenalkyl steht, und M für Na, K, Li, Mg, Ca oder Be. Ein weiteres Beispiel für ein primäres Amin (Aminosäuresalz) zeigt FIG 8 mit R1 für Alkyl, Aryl, Hydroxylalkyl oder Halogenalkyl und M für Na, K, Li, Mg, Ca oder Be.

## Patentansprüche

1. Lösungsmittel (2) umfassend eine wässrige Lösung eines sekundären Amins (4) und einen auf die Bildung von Nitrosamin inhibierend wirkenden Zusatzstoff (6), wobei der Zusatzstoff (6) ein primäres Amin (3) umfasst.

2. Lösungsmittel (2) nach Anspruch 1, wobei das Verhältnis zwischen sekundären Amin (4) und primären Amin (3) zwischen 80:20 und 99:1 liegt.

3. Lösungsmittel (2) nach einem der Ansprüche 1 oder 2, wobei das sekundäre Amin (4) ein Aminosäuresalz ist.

4. Lösungsmittel (2) nach einem der Ansprüche 1 bis 3, wobei das primäre Amin (3) ein Aminosäuresalz ist.

5. Verfahren zur Bereitstellung einer Absorptionsflüssigkeit, bei dem
a) eine wässrigen Lösung mit einem sekundären Amin (4) angesetzt wird, und
b) in die wässrigen Lösung ein auf die Bildung von Nitrosamin inhibierend wirkender Zusatzstoff (6) eingebracht wird, wobei der Zusatzstoff (6) ein primäres Amin (3) umfasst.

6. Verfahren nach Anspruch 5, bei dem das Verhältnis zwischen sekundären Amin (4) und primären Amin (3) auf zwischen 80:20 und 99:1 eingestellt wird.

7. Verfahren nach einem der Ansprüche 5 oder 6, bei dem das sekundäre Amin (4) ein Aminosäuresalz ist.

8. Verfahren nach einem der Ansprüche 5 bis 7, bei dem das primäre Amin (3) ein Aminosäuresalz ist.

9. Absorptionsflüssigkeit, hergestellt nach einem der Ansprüche 5 bis 8.

10. Verwendung eines Lösungsmittels (2) zur selektiven Absorption von CO₂ aus dem Rauchgas einer Verbrennungsanlage, wobei das Lösungsmittel (2) eine wässrige Lösung eines sekundären Amins (4) und einen auf die Bildung von Nitrosamin inhibierend wirkender Zusatzstoff (6) enthält, wobei der Zusatzstoff (6) ein primäres Amin (3) umfasst.

11. Verwendung nach Anspruch 10, bei der die Absorption von Kohlendioxid aus dem Rauchgas eines fossil befeuerten Dampfkraftwerks, aus dem Abgas einer Gasturbinenanlage, oder aus dem Abgas einer kombinierten Gas- und Dampfturbinenanlage erfolgt.
